# EUROPEAN PATENT SPECIFICATION

(11) **EP 0 946 094 B1**
(45) Date of publication and mention of the grant of the patent: **06.11.2002**
(21) Application number: 97950571.6
(22) Date of filing: 18.12.1997
(51) Int. Cl.: A01N 43/08

(54) **AGENT ATTRACTING BARK BEETLES**
BORKENKÄFER ANLOCKENDES MITTEL
AGENT ATTIRANT LES SCOLYTES

(30) Priority: 19.12.1996 SK 163596
(43) Date of publication of application: 06.10.1999
(73) Proprietor: Varkonda, Stefan, 821 03 Bratislava (SK)
(72) Inventor: Varkonda, Stefan, 821 03 Bratislava (SK)
(74) Representative: Ricker, Mathias, Dr. Dipl.-Chem.
(86) International application number: SK9700013
(87) International publication number: WO98026663

(56) References cited:
- EP-A- 0 233 164
- DATABASE WPI Section Ch, Week 9537, Derwent Publications Ltd., London, GB; Class C03, AN 95-282397, XP002060761 & SK 1503 93 A (VARKONDA S) 11 July 1995
- CHEMICAL ABSTRACTS, vol. 96, no. 21, 24 May 1982 Columbus, Ohio, US; abstract no. 181022, O.A.KOZHICH ET AL.: "Synthesis of 2-ethyl-1,6-dioxaspiro[4.4]nonane, main component of the chalcograph beetle (Pityogenes chalcographus L.) pheromone" XP002060760 & IZV.AKAD.NAUK.SSSR,SER.KHIM, no. 2, 1982, pages 325-328,
- DATABASE WPI Section Ch, Week 9249 Derwent Publications Ltd., London, GB; Class C02, AN 92-399653 XP002060762 & CS 9 006 000 A (CHEMIKA SP) , 17 June 1992

## Description

### Technical Field

The invention relates to a composition attracting bark beetles suitable especially for attracting *Pityogenes chalcographus* and *Ips typogaphus.*

### Background of invention

It is known that the main components of the aggregation pheromone of *P. chalcographus* are chalcogran and Me-2,4-decadienoate (J. Chem. Ecol. 1989, 15(2): 685-95. J. Chem. Ecol. 1990, 16(3): 861-76), the combination of which has a potentiating character. The final degree of the attracting effect of the preparations on their basis is considerably dependent on the presence and/or ratio of the particular stereoisomers putting high demands on the synthesis. It is also known that this effect can be potentiated to a limited extent by additional minority components such as α-pinene or β-pinene. The active components, usually utilised in a suitable inery organic solvent (higher alcohols), are applied into special dispensers as the final forms. These preparations are multi-component mixtures (DE 3430211 A₁). There is a European patent application EP-A-0233164 protecting the use of methyl deca-2,3-dienoate in combination with chalcogran for monitoring of occurrence and trapping of *P. chalcographus*, whereby additional substances enhancing the effect can be used in the mixture (Naturwissenschaften 75, 1988, 153-155). There is also the patent application PV 1503-93 protecting the use of 2-methoxypropyl deca-2,4-dienoate in combination with chalcogran for trapping of *P. chalcographus* and in mixture with other substances also for trapping of *I. typographus.*

Database WPI, Section CH, Week 9537, AN: 95-282397 discloses a mixture of 2-ethyl-1,6-dioxaspiro[4,4]nonane (chalcogran) and methoxypropyl ester of 2,4-decadienoic acid as insect attracting composition.

### Disclosure of the invention

Now it has been found that a suitable attracting composition for bark beetles is a preparation containing as an active component a mixture of decadienoic acid derivatives of the general formula I:

CH₃―(CH₂)₄―(CH=CH)₂―COOR (I)

where R is methyl or methoxypropyl group,
and at least one furyl derivative of the general formula II 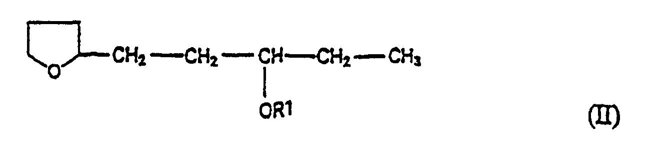 where R¹ is H or -COCH₃ group in the medium of a suitable solvent. The mixture of the above derivatives has a synergetic effect.

Preferred solvents include preferably liquid aliphatic hydrocarbons or their alcohols, ethers or esters. More preferred solvents include especially methylbutenol, methylbutynol, methoxypropanol and hexane.

Together with the active component of the composition according to the present invention, also other active substances can be used in application such as pinene, camphene, limonene, ipsenol, ipsdienol or essential oils.

The composition according to the invention can be used for monitoring and, with an advantage, for direct control of population density of *P. chalcographus* but also *I. typographus* by the method of mass trapping or by the method of confusion, without mutual interference, whereby the insect species abundance in the catch corresponds to their abundance in the particular natural population.

The composition according to the present invention is preferably applied in the wick type dispensers, PE sacks and other types providing for gradual and sufficiently long-term release of the active substances to the air and ensuring sufficient duration of the attracting effect during swarming of both species of bark beetle or in confusion by area application. Trapping of these target species is not accompanied by undesirable trapping of other useful or inert species of insects. The dispensers can be applied to routinely produced traps with an advantage for barrier-type, impact-type, especially the Ecotrap type, but also other analogous types.

The following examples are meant to illustrate, but not limit the scope of the present invention.

### Example 1

### Field experiment at the location Malá Lehota

The dispensers with tested compositions were applied to impact-type traps able to trap also the smaller *Pityogenes chalcographus.* The traps were placed in the spruce forest in accordance with the applicable standard, preferably to the so called growth wall. The checks of catch were done in 24-hours intervals. The position of attracrants was varied to eliminate the position effect. The results are summarised in Table 1.

**Table 1:**

| Total number of trapped insects of *P. chalcographus* (PC) and *I. typographus* (IT) during 8-days' exposition of dispensers, the dispenser position being changed daily. (Location Malá Lehota, 24-31 July 1994) | | | | | | | | | | | |
|---|---|---|---|---|---|---|---|---|---|---|---|
| Dis. No. | SCV [g] | CHAL [ml] | FUROL [ml] | ACET [ml] | MDD [ml] | MPDD [ml) | MBEOL [ml] | MBIOL [ml] | MPOL[ml] | PCH | IT |
| | | | | | | | | | | [pcs] | |
| 1 | - | 0.01 | - | - | 0.01 | - | - | - | 2.48 | 1400 | - |
| 2 | - | - | 0.01 | - | 0.01 | - | - | - | 2.48 | 1530 | - |
| 3 | - | - | - | 0.01 | 0.01 | - | - | - | 2.48 | 1490 | - |
| 4 | - | - | 0.01 | - | - | 0.01 | - | 1.24 | 1.24 | 1680 | - |
| 5 | - | - | - | 0.01 | - | 0.01 | - | 1.24 | 1.24 | 1650 | - |
| 6 | - | - | 0.01 | - | - | - | - | - | 2.49 | 32 | - |
| 7 | - | - | - | 0.01 | - | 0.01 | - | - | 2.49 | 54 | - |
| 8 | - | - | - | - | - | 0.01 | - | - | 2.49 | 11 | - |
| 9 | - | - | 0.01 | - | 0.01 | - | - | 2.475 | 0.005 | 1650 | - |
| 10 | - | - | - | 0.01 | 0.01 | - | - | 2.475 | 0.005 | 1580 | - |
| 11 | - | - | 0.01 | | - | 0.01 | - | 2.475 | 0.005 | 1790 | - |
| 12 | - | - | - | 0.01 | - | 0.01 | - | 2.475 | 0.005 | 1420 | - |
| 13¹⁾ | - | - | 0.01 | | - | 0.01 | - | 2.47 | 0.005 | 1810 | - |
| 14¹⁾ | - | - | - | 0.01 | - | 0.01 | - | 2.47 | 0.005 | 1820 | - |
| 15²⁾ | - | - | 0.01 | | - | 0.01 | - | 2.47 | 0.005 | 1809 | - |
| 16²⁾ | - | - | - | 0.01 | - | 0.01 | - | 2.47 | 0.005 | 1780 | - |
| 17 | - | - | 0.01 | | 0.01 | - | 2.48 | - | - | 1510 | - |
| 18 | - | - | - | 0.01 | 0.01 | - | 2.48 | - | - | 1430 | - |
| 19³⁾ | 0.075 - | - | 0.01 | | - | 0.01 | - | 2.40 | 0.005 | 1720 | 450 |
| 20³⁾ | 0.075 | - | - | 0.01 | - | 0.01 | - | 2.40 | 0.005 | 1690 | 490 |
| 21⁴⁾ | 0.075 | - | 0.01 | | 0.005 | 0.005 | 2.40 | - | - | 1690 | 380 |
| 22⁴⁾ | 0.075 | - | - | 0.01 | 0.005 | 0.005 | 2.40 | - | - | 1590 | 360 |
| 23⁵⁾ | 0.075 | 0.005 | 0.005 | - | - | 0.001 | 2.395 | - | - | 1730 | 430 |
| 24⁵⁾ | 0.075 | 0.005 | - | 0.005 | - | 0.001 | 2.395 | - | - | 1710 | 520 |
| 25 | 0.075 | - | 0.01 | | 0.01 | - | - | - | 2.405 | 1700 | 390 |
| 26 | 0.075 | - | - | 0.01 | 0.01 | - | - | - | 2.405 | 1620 | 340 |
| 27 | 0.075 | - | - | | - | - | - | - | 2.425 | 5 | 410 |
| 28 | - | - | 0.005 | 0.005 | 0.01 | - | - | - | 2.48 | 1540 | - |
| 29 | - | - | 0.005 | 0.005 | - | 0.01 | - | 1.24 | 1.24 | 1560 | |
| 30 | - | - | 0.005 | 0.005 | - | - | - | - | 2.49 9 | 36 6 | - |
| 31 | - | - | 0.005 | 0.005 | 0.01 | - | - | 2.475 | 0.005 | 1520 | - |
| 32 | - | - | 0.005 | 0.005 | - | 0.01 | - | 2.475 | 0.005 | 1630 | - |
| 33¹⁾ | - | - | 0.005 | 0.005 | - | 0.01 | - | 2.47 | 0.005 | 1610 | - |
| 34²⁾ | - | - | 0.005 | 0.005 | - | 0.01 | - | 2.47 | 0.005 | 1820 | - |
| 35 | - | - | 0.005 | 0.005 | 0.01 | - | 2.48 | - | - | 1490 | - |
| 36³⁾ | 0.075 | - | 0.005 | 0.005 | - | 0.01 | - | 2.40 | 0.005 | 1820 | 490 |
| 37⁴⁾ | 0.075 | - | 0.005 | 0.005 | 0.005 | 0.005 | 2.40 | - | - | 1.690 | 420 |
| 38⁵⁾ | 0.075 | 0.005 | 0.005 | 0.005 | - | 0.001 | 2.395 | - | - | 1740 | 390 |
| 39 | 0.075 | - | 0.005 | 0.005 | 0.01 - | - | - | - | 2.405 | 1680 | 420 |

| | | | | | | | | | | | |
|---|---|---|---|---|---|---|---|---|---|---|---|
| Explanation of abbreviations: SCV - S-(*cis*)-verbenol MPOL - methoxypropanol FUROL - 1-(α-tetrahydrofuryl)pentane-3-ol ACET - 1-(α-tetrahydrofuryl)-3-acetoxy-pentane CHAL - racemic mixture of chalcogran MDD - methyl deca-2,4-dienoate MPDD - 2-methoxypropyl deca-2,4-dienoate MBIOL - methylbutynol MBEOL - methylbutenol ¹⁾ - (-)α-pinene 0.005 ml | | | | | | | | | | | |
| ²⁾ - [R](+)limonene 0.005 ml | | | | | | | | | | | |
| ³⁾ (-)α-pinene 0.005 ml + pine essential oil 0.005 ml | | | | | | | | | | | |
| ⁴⁾ pine essential oil 0.005 ml | | | | | | | | | | | |
| ⁵⁾ -[R](+)limonene+pine essential oil 0.005 ml | | | | | | | | | | | |

### Example 2

### Field experiment at the location Brod

The procedure was similar to that of Example 1. The period of exposition was 16 days, the attractants' positions were changed on the 8^{th} day. The results are summarised in Table 2 and Table 3.

**Table 2**

| Total number of trapped insects of *P. chalcographu*s (PC) and *I. typhographus* (IT) during 16 days' exposition of dispensers (Location Brod, 8-24 July 1994) | | | | | | | | | | | |
|---|---|---|---|---|---|---|---|---|---|---|---|
| Compound | | | | IT | PC | Compound | | | | IT | PC |
| 1. | FUROL | 0.02 | ml | 0 | 4 | 6. | ACET | 0.02 | ml | 0 | 6 |
| | MBEOL | 1.98 | ml | | | | MBEOL | 1.98 | ml | | |
| 2. | CHAL | 0.02 | ml | 2 | 5600 | 7. | CHAL | 0.02 | ml | 0 | 5420 |
| | MDD | 0.02 | ml | | | | MDD | 0.02 | ml | | |
| | MBEOL | 1.96 | ml | | | | MBEOL | 1.96 | ml | | |
| 3. | FUROL | 0.02 | ml | 0 | 6100 | 8. | ACET | 0.02 | ml | 0 | 5960 |
| | MPDD | 0.02 | ml | | | | MPDD | 0.02 | ml | | |
| | MBEOL | 1.96 | ml | | | | MBEOL | 1.96 | ml | | |
| 4. | FUROL | 0.02 | ml | 0 | 6000 | 9. | ACET | 0.02 | ml | 0 | 6120 |
| | MDD | 0.02 | ml | | | | MDD | 0.02 | ml | | |
| | MBEOL | 1.96 | ml | | | | MBEOL | 1.96 | ml | | |
| 5. | SCV | 0.08 | g | 2500 | 5300 | 10. | SCV | 0.08 | g | 2500 | 4760 |
| | FUROL | 0.02 | ml | | | | ACET | 0.02 | ml | | |
| | MPDD | 0.02 | ml | | | | MPDD | 0.02 | ml | | |
| | MBIOL | 1.87 | ml | | | | MBIOL | 1.87 | ml | | |
| | MPOL | 0.01 | ml | | | | MPOL | 0.01 | ml | | |

**Table 3:**

| Additional experiments at location Brod (24 July - 8 August 1994) | | | | | |
|---|---|---|---|---|---|
| Compound | | | | IT | PC |
| 11. | FUROL | 0.01 | ml | 0 | 4 |
| | ACET | 0.01 | ml | | |
| | MBEOL | 1.98 | ml | | |
| 12. | CHAL | 0.02 | ml | 0 | 4790 |
| | MDD | 0.02 | ml | | |
| | MBEOL | 1.96 | ml | | |
| 13. | FUROL | 0.01 | ml | 0 | 5220 |
| | ACET | 0.01 | ml | | |
| | MPDD | 0.02 | ml | | |
| | MBEOL | 1.96 | ml | | |
| 14. | FUROL | 0.01 | ml | 0 | 5620 |
| | ACET | 0.01 | ml | | |
| | MDD | 0.02 | ml | | |
| | MBEOL | 1.96 | ml | | |
| 15. | SCV | 0.08 | g | 2560 | 5810 |
| | FUROL | 0.01 | ml | | |
| | ACET | 0.01 | ml | | |
| | MPDD | 0.02 | ml | | |
| | MBIOL | 1.87 | ml | | |
| | MPOL | 0.01 | ml | | |

Explanation of abbreviations in tables 2 and 3:
- SCV: -S-(*cis*)-verbenol
- MPOL: - methoxypropanol
- FUROL: - 1-(α-tetrahydrofuryl)pentane-3-ol
- ACET: - 1-(α-tetrahydrofuryl)-3-acetoxy-pentane
- CHAL: - racemic mixture of chalcogran
- MDD: - methyl deca-2,4-dienoate
- MPDD: - 2-methoxypropyl deca-2,4-dienoate
- MBIOL: - methylbutynol
- MBEOL: - methylbutenol

### Industrial Applicability

The invention is designed for the field of plant protection, especially for protection of forest growths against pests from the group of bark- and wood-damaging (ligniperdous) insects, especially *Pityogenes chalcographus* and *Ips typographus*.

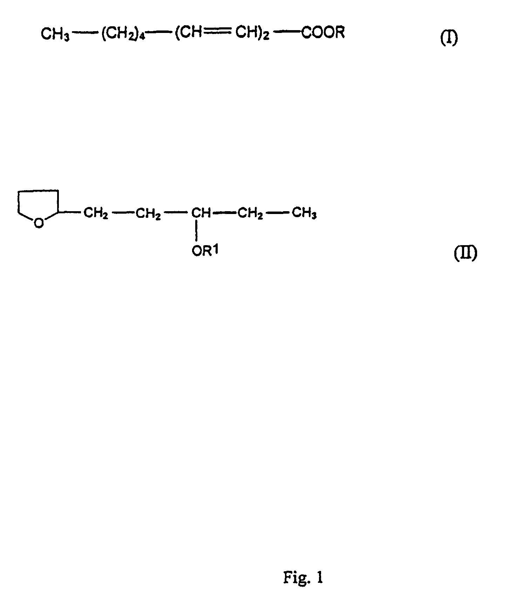

## Claims

1. Composition attracting bark beetles designated especially for monitoring of occurrence and mass trapping of *Pityogenes chalcographus,* as the case may be, simultaneously with *Ips typographus*, suitable especially for baiting of traps with pheromone dispensers **characterised by** comprising as the effective component a mixture of decadienoic acid derivative of the general formula I:
CH₃―(CH₂)₄―(CH=CH)₂―COOR (I)
where R means methyl or methoxypropyl group, and at least one furyl derivative of the general formula II 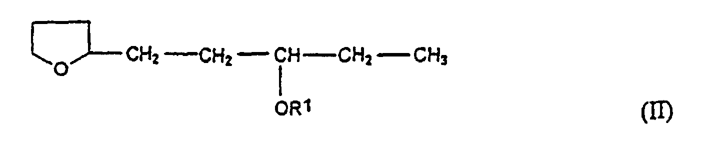 where R¹ means -H or -COCH₃ group in the medium of a suitable solvent.

2. Composition according to claim 1 **characterised by** individual components of the mixture being represented in the active component of the composition in the ratio of 1:1 to 1:100, preferably in the mutual ratio of 1:2, whereby in the case, where the mixture comprises derivatives, their mutual ratio is 1:1.

3. Composition according to claim 1 **characterised by** the fact that the solvent is selected preferably from liquid aliphatic hydrocarbons or their alcohols, ethers and esters.

4. Composition according to claim 3 **characterised by** the fact that the solvent is selected from a group comprising hexane, methylbutenol, methylbutynol and methoxypropanol.

5. Composition according to any of the preceding claims **characterised by** the fact that it further contains at least one substance of the group comprising 2-ethyl-1,6-dioxaspiro[4.4]nonane, and S-(*cis*)-verbenol.

6. Composition according to any of the preceding claims **characterised by** the fact that it further contains terpenes and/or their mixtures and, as the case may be, essential oils.

## Patentansprüche

1. Zusammensetzung zum Anlocken von Borkenkäfern, welche besonders zum Überwachen des Vorkommens und des Massenfangens von *Pityogenes chalcographus* bestimmt ist, je nachdem gleichzeitig mit *Ips typographus,* besonders geeignet zum Beködern von Fallen mit Pheromonverteilern, **dadurch gekennzeichnet, dass** die effektive Komponente eine Mischung des Decadiensäurederivates der allgemeinen Formel I:
CH₃―(CH₂)₄―(CH=CH)₂―COOR (I)
worin R die Gruppe Methyl oder Methoxypropyl, und wenigstens eines Furylderivates der allgemeinen Formel II 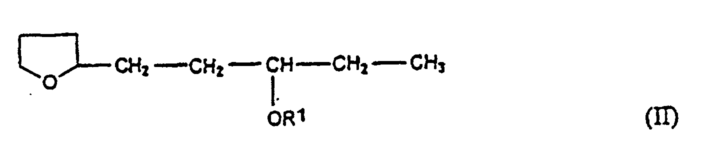 worin R¹ die Gruppe -H oder -COCH₃ bedeuten, im Medium eines geeigneten Lösungsmittels umfasst.

2. Zusammensetzung nach Anspruch 1, **dadurch gekennzeichnet, dass** einzelne Komponenten der Mischung in der aktiven Komponente der Zusammensetzung im Verhältnis von 1:1 bis 1:100 stehen, vorzugsweise im beiderseitigen Verhältnis von 1:2, wobei für den Fall, dass die Mischung aus zwei Furylderivaten gebildet wird, ihr beiderseitiges Verhältnis 1:1 ist.

3. Zusammensetzung nach Anspruch 1, **dadurch gekennzeichnet, dass** das Lösungsmittel vorzugsweise aus flüssigen aliphatischen Kohlenwasserstoffen oder deren Alkoholen, Ethern und Estern ausgewählt ist.

4. Zusammensetzung nach Anspruch 3, **dadurch gekennzeichnet, dass** das Lösungsmittel aus einer Gruppe umfassend Hexan, Methylbutenol, Methylbutynol und Methoxypropanol ausgewählt ist.

5. Zusammensetzung nach einem der vorstehenden Ansprüche, **dadurch gekennzeichnet, dass** sie zusätzlich außer einer Mischung des Decadiensäurederivates der allgemeinen Formel I und wenigstens eines Furylderivates der allgemeinen Formel II, wenigstens eine Substanz aus der Gruppe umfassend 2-Ethyl-1,6-dioxaspiro[4.4]nonan, S-(cis)-Verbenol und Methyldeca-2,4-dienoat enthält.

6. Zusammensetzung nach einem der vorstehenden Ansprüche, **dadurch gekennzeichnet, dass** sie zusätzlich außer einer Mischung des Decadiensäurederivates der allgemeinen Formel I und wenigstens eines Furylderivates der allgemeinen Formel II, Terpene und/oder ihre Mischungen, und, je nachdem, essentielle Öle enthält.

## Revendications

1. Composition attirant les coléoptères de l'écorce, spécialement conçu pour surveiller la survenue et le piégeage en masse de *Pityogenes chalcographus,* le cas échéant en même temps que *Ips typographicus,* convenant particulièrement pour appâter des pièges avec distributeurs de phéromones, **caractérisé en ce qu'**elle comprend comme constituant actif un mélange d'un dérivé de l'acide décadionique de formule générale I:
CH₃―(CH₂)₄―(CH=CH)₂―COOR (I)
dans laquelle R signifie un groupe méthyle ou méthoxypropyle, et d'au moins un dérivé furyle de formule générale II: 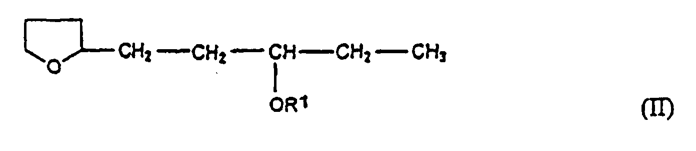 dans laquelle R¹ signifie -H ou un groupe -COCH₃, dans le milieu d'un solvant approprié.

2. Composition selon la revendication 1, **caractérisée en ce que** des constituants individuels sont représentés dans le constituant actif de la composition dans le rapport 1:1 à 1:100, de préférence dans le rapport mutuel de 1:2 de sorte que, dans le cas où le mélange comprend deux dérivés furyle, leur rapport mutuel soit de 1:1.

3. Composition selon la revendication 1, **caractérisée par le fait que** le solvant est choisi de préférence parmi les hydrocarbures aliphatiques liquides ou leurs alcools, éthers et esters.

4. Composition selon la revendication 3, **caractérisée par le fait que** le solvant est choisi parmi un groupe comprenant l'hexane, le méthylbuténol, le méthylbutynol et le méthoxypropanol.

5. Composition selon l'une des revendications précédentes, **caractérisée par le fait qu'**elle comprend en outre au moins une substance du groupe comprenant le 2-éthyl-1,6-dioxaspiro[4.4]nonane et le S-(*cis*)-verbénol.

6. Composition selon l'une des revendications précédentes, **caractérisée par le fait qu'**elle comprend en outre des terpènes et/ou leur mélanges et, le cas échéant, des huiles essentielles.
